(19) **Europäisches Patentamt / European Patent Office / Office européen des brevets**

(11) **EP 1 198 903 B1**

(12) **EUROPEAN PATENT SPECIFICATION**

(45) Date of publication and mention
of the grant of the patent:
**05.05.2010 Bulletin 2010/18**

(21) Application number: **00945050.3**

(22) Date of filing: **30.06.2000**

(51) Int Cl.:
**H04B 7/02** (2006.01)

(86) International application number:
**PCT/US2000/018113**

(87) International publication number:
**WO 2001/003330 (11.01.2001 Gazette 2001/02)**

(54) **METHOD AND APPARATUS FOR USING FREQUENCY DIVERSITY TO SEPARATE WIRELESS COMMUNICATION SIGNALS**

VERFAHREN UND VORRICHTUNG ZUR TRENNUNG VON SIGNALEN IN DRAHTLOSER KOMMUNIKATION DURCH FREQUENZ-DIVERSITÄT

PROCEDE ET APPAREIL PERMETTANT D'UTILISER LA DIVERSITE DE FREQUENCE POUR SEPARER DES SIGNAUX DE COMMUNICATION SANS FIL

(84) Designated Contracting States:
**AT BE CH CY DE DK ES FI FR GB GR IE IT LI LU MC NL PT SE**

(30) Priority: **02.07.1999 US 347182**

(43) Date of publication of application:
**24.04.2002 Bulletin 2002/17**

(73) Proprietor: **Shattil, Steven J.
Boulder, CO 80303 (US)**

(72) Inventor: **Shattil, Steven J.
Boulder, CO 80303 (US)**

(74) Representative: **Gates, Marie Christina Esther et al
Tomkins & Co.
5 Dartmouth Road
Dublin 6 (IE)**

(56) References cited:
**US-A- 5 528 581     US-A- 5 828 658**

- **XU W ET AL: "ON THE PERFORMANCE OF MULTICARRIER RAKE SYSTEMS" GLOBAL TELECOMMUNICATIONS CONFERENCE (GLOBECOM),US,NEW YORK, IEEE, 3 November 1997 (1997-11-03), pages 295-299, XP000737553 ISBN: 0-7803-4199-6**
- **WEERACKODY V: "DIVERSITY FOR THE DIRECT-SEQUENCE SPREAD SPECTRUM SYSTEM USING MULTIPLE TRANSMIT ANTENNAS" PROCEEDINGS OF THE INTERNATIONAL CONFERENCE ON COMMUNICATIONS (ICC),US,NEW YORK, IEEE, vol. -, 23 May 1993 (1993-05-23), pages 1775-1779, XP000448429 ISBN: 0-7803-0950-2**

EP 1 198 903 B1

## Description

<u>Field of the Invention</u>

This invention relates to spatial processing of wideband signals in a multipath environment.

<u>Background of the Invention</u>

Beamforming is a technique for providing an array of transducers with directional receiving and transmitting capabilities. An antenna array can implement same-cell frequency reuse by processing signals according to their angles of arrival. Array processing enables spatial division multiple access, which is described in U. S. Pat. Nos. 5,828,658, 5,642,353, 5,625,880, 5,592,490, and 5,515,378.

An antenna array can be used to mitigate the effects of multipath fading. In a multipath environment, signals received by a mobile receiver have a rapidly changing signal power and a slowly changing mean value. The rapidly varying component can be characterized by Ricean or Rayleigh distributions. Spatial diversity is achieved by separating the antennas in an array, which mitigates fading because deep fades typically do not occur simultaneously at spatially separated antennas. The use of transmitting and receiving antennas to average the effects of fading is described in U. S. Pat. Nos. 5,437,055, 5,513,176, and 5,577,265.

Spatial interferometry multiplexing (SIM) uses multipath fading to improve spatial demultiplexing performed by an array. SIM is a cancellation technique that exploits spatial variations in the complex gain of signals received by the array. SIM is described in U. S. Pat. No. 6,008,760, which is incorporated by reference.

Frequency diversity mitigates signal loss due to deep fades. Frequency diversity is a superior means for combating multipath fading. Therefore, wideband protocols (such as the multicarrier protocols described in U. S. Pat. Nos. 5,519,692, 5,504,783, and 5,563,906) offer benefits, such as reduced transmission power and minimum power variations in received signals.

The implementation of a broadband array is substantially more complicated than spatially processing narrowband signals. Broadband beamforming weights need to be frequency dependent, thus requiring frequency separation of antenna signals before application of the weights. Digital beamforming for antenna arrays is described in U. S. Pat. No. 5,671,168. The development of the Fast Fourier Transform (FFT) and digital signal-processing microcircuits make it possible to implement digital beamforming processes. However, the complexity of array processing and the physical size of antenna arrays make arrays impractical for most mobile receivers.

US Patent No. 5,528,581 describes a diversity transmission system for sub-band diversity reception.

<u>Summary of the Invention</u>

Spatial processing of wideband and multicarrier signals in a multipath environment is achieved by exploiting frequency diversity of signals received by an antenna. Received wideband signals consist of many individual frequency-diverse signals. Each of the received signals transmitted by spatially separated transmit sources have unique spatial gain distributions (complex amplitude profiles with respect to space or signal bandwidth) that depend on frequency-dependent multipath fades. Each spatially separated transmit source generates signals that undergo different fades. The frequency component of each transmitted signal undergoes a frequency-dependent fade. The present invention uses the relative spatial gain distributions of the received signals to separate interfering signals.

It is the principle objective of the present invention to provide a novel and improved method and apparatus for processing spread-spectrum signals received by an antenna array. The foregoing is accomplished by using diversity parameters (such as directionality, space, time, polarization, frequency, mode, spatial subchannels, and phase space) to correlate a plurality of desired signals and decorrelate interfering signals received by the array.

Correlation processing at antenna arrays allows a small number of antenna elements to separate a large number of unknown signals. Long Baseline Interferometry may be used to increase the number of resolvable signals that can be processed by the array. Consequently, an objective of the invention is to reduce the number of antenna elements needed for array processing of spread-spectrum signals.

The objectives of the present invention recited above, as well as additional objects, are apparent in the description of the preferred embodiments.

<u>Brief Description of the Drawings</u>

FIG. 1 shows a block diagram of a receiver of the present invention.

FIG. 2 shows a frequency-diverse receiver and spatial demultiplexer for spatially demultiplexing received signals.
FIG. 3 shows a spread-spectrum receiver system of the present invention that uses an antenna array and a correlator to decode received spread-spectrum signals.
FIG. 4 is a plot of a carrier beam pattern and a correlation beam pattern of an array of receivers.
FIG. 5A shows two decorrelated direct-sequence signals arriving at an angle $\theta_i$ relative to an array having two spatially separated receivers.
FIG. 5B shows two decorrelated noise signals arriving at an angle $\theta_i$ relative to an array having two spatially separated receivers.
FIG. 6 shows a relative time-domain representation of two time-offset samples of a spread-spectrum signal having a plurality of multipath components.
FIG. 7 shows a process diagram for a diversity-based cancellation system.
FIG. 8 shows a time-domain representation of a plurality of frequency-domain encoded signals.
FIG. 9A shows a process diagram of a multiple-diversity communication system.

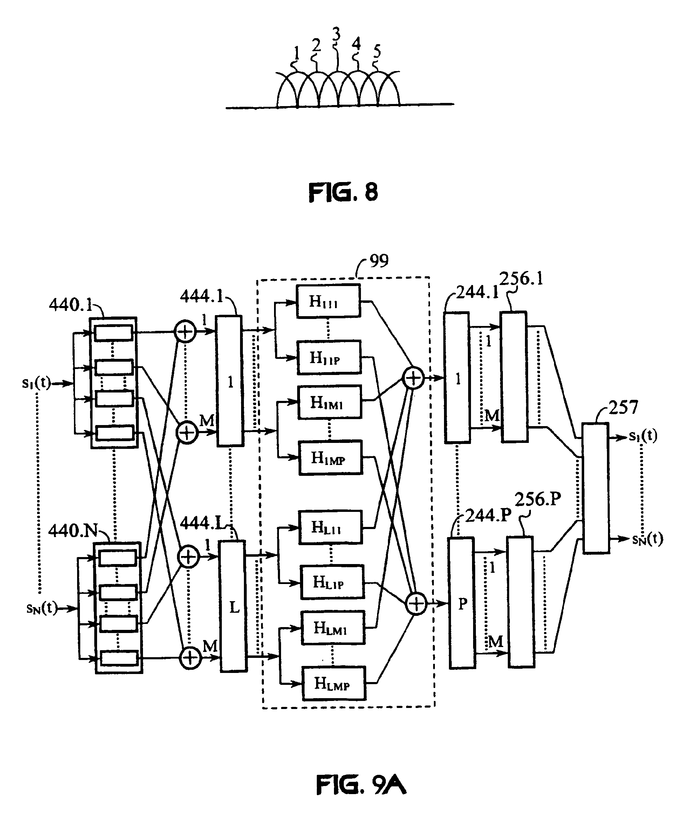

FIG. 9A shows an alternative process diagram of a muhiple-diversity communication system.

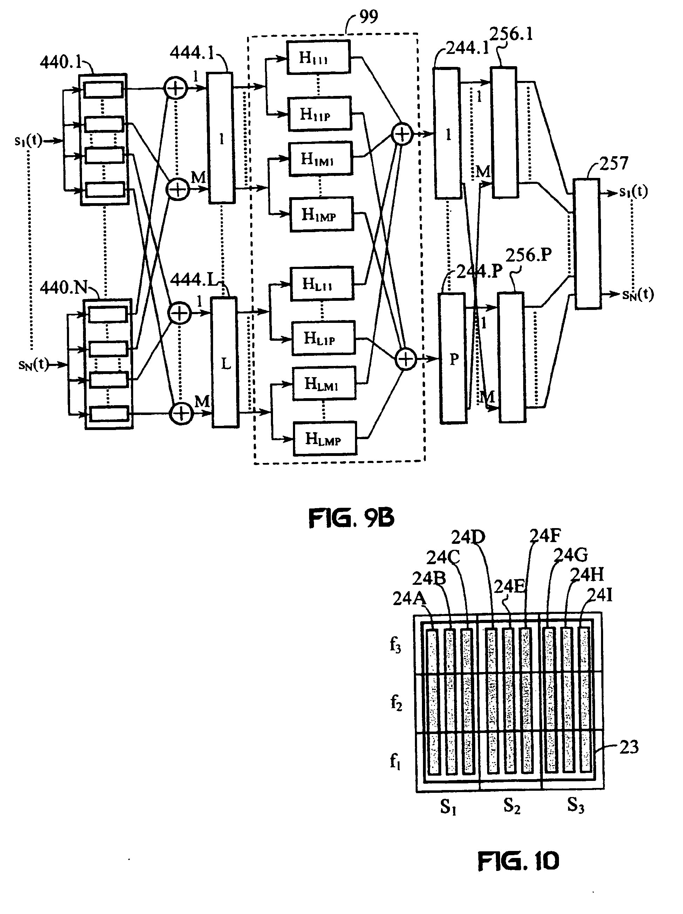

FIG. 10 illustrates a principle of nested interferometry.

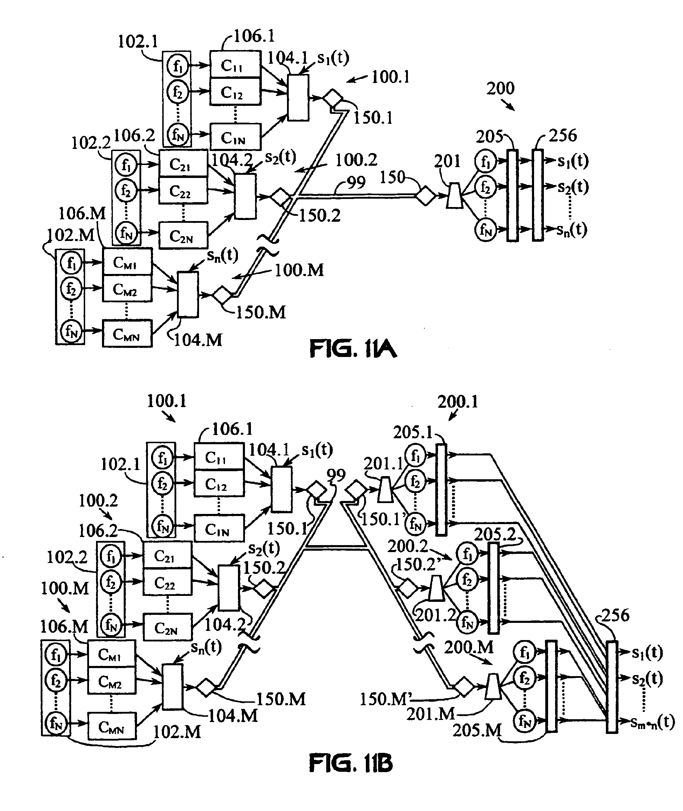

FIG. 11A shows a frequency-diversity interferometry multiplexing system.
FIG. 11B is a diagram of a cascaded interferometry system.

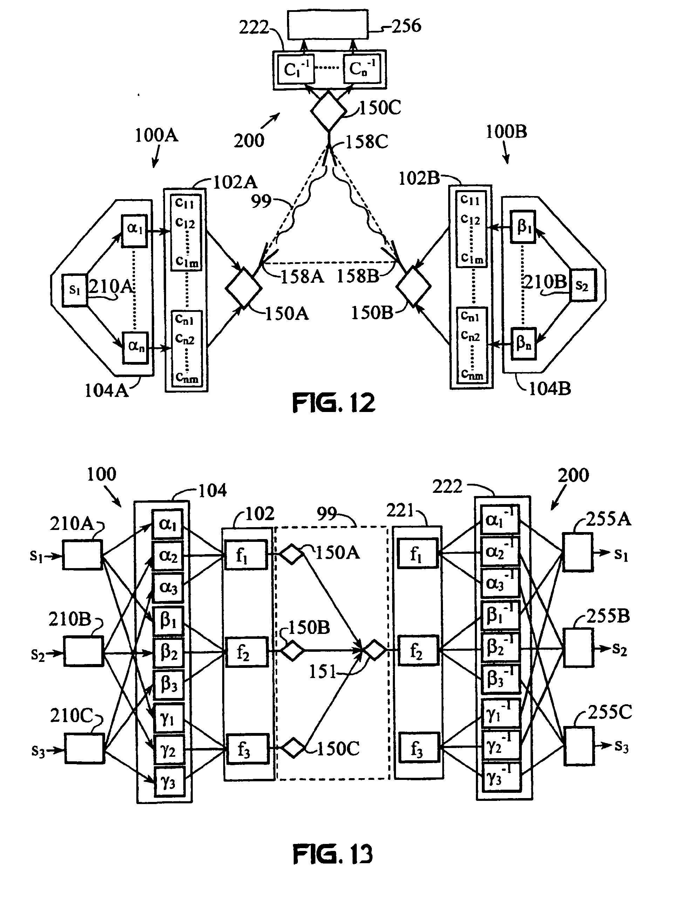

FIG. 12 is a diagram of a spread-spectrum interferometer.
FIG. 13 shows a redundant-carrier communication system.

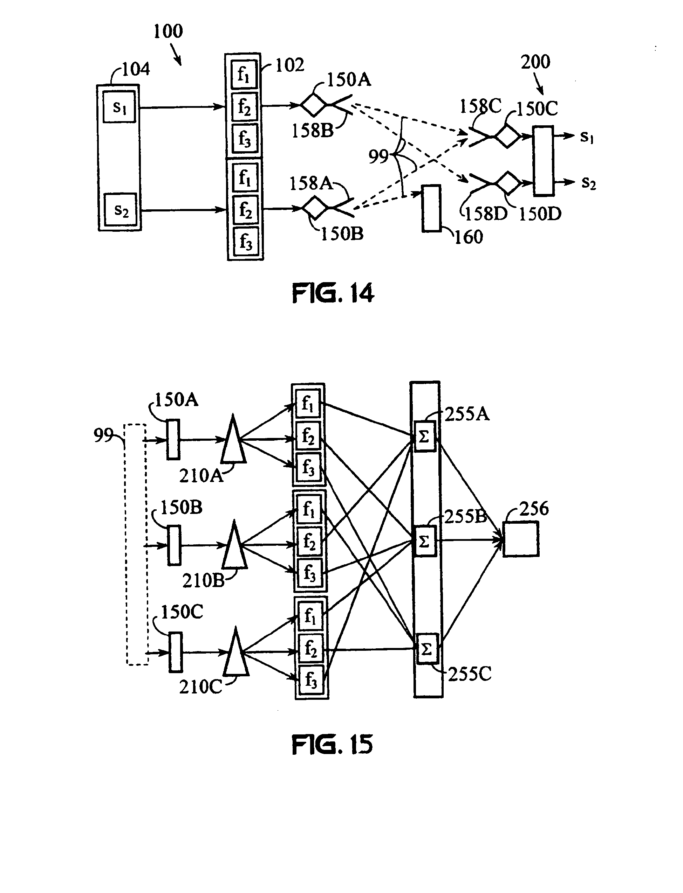

FIG. 14 shows a communication system that provides enhanced diversity and increased capacity.
FIG. 15 is a diagram of a multicarrier receiver.

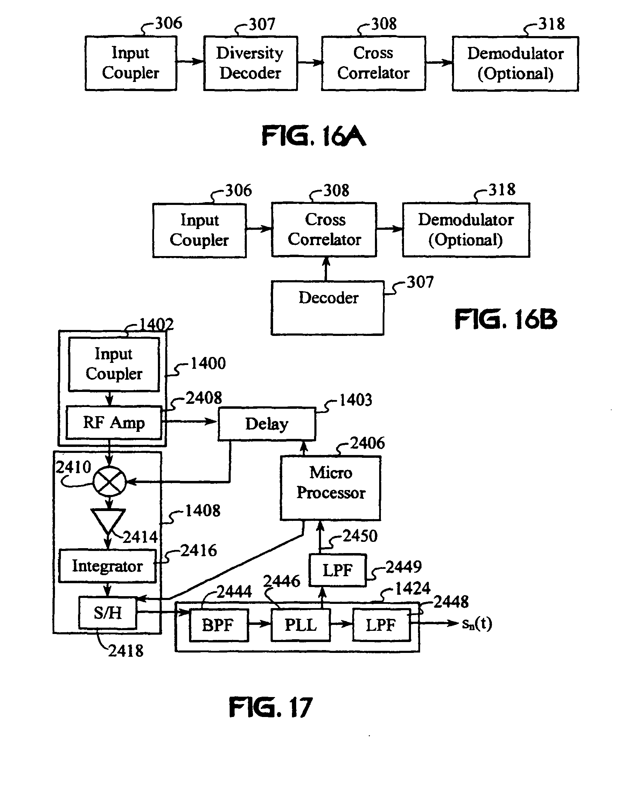

FIG. 16A illustrates a reception system and method using coherence multiplexing.
FIG. 16B illustrates a reception system and method using correlation.
FIG. 17 is a diagram of a coherence-multiplexing receiver.

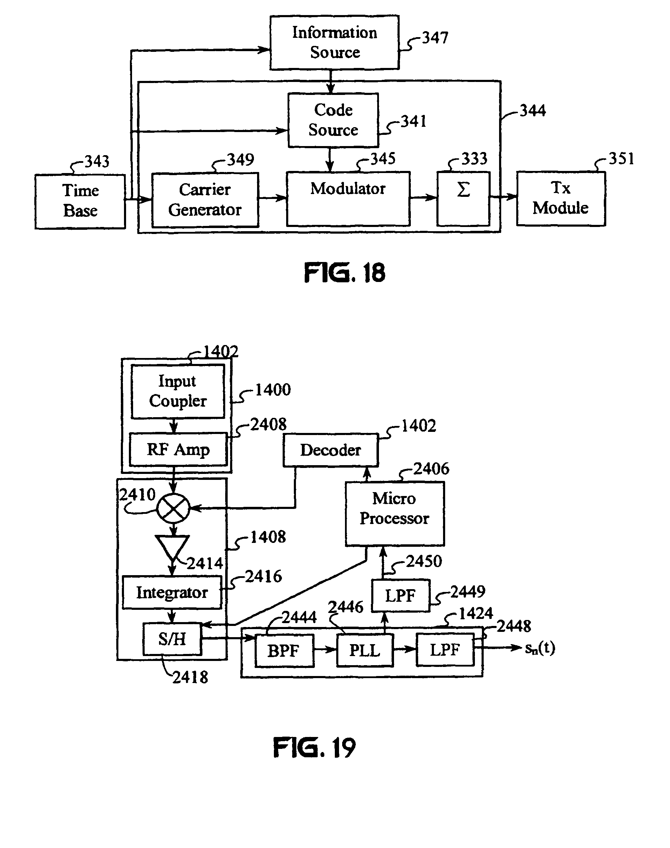

FIG. 18 shows a multicarrier generator used in a transmission system.
FIG. 19 is a diagram of a correlation receiver.

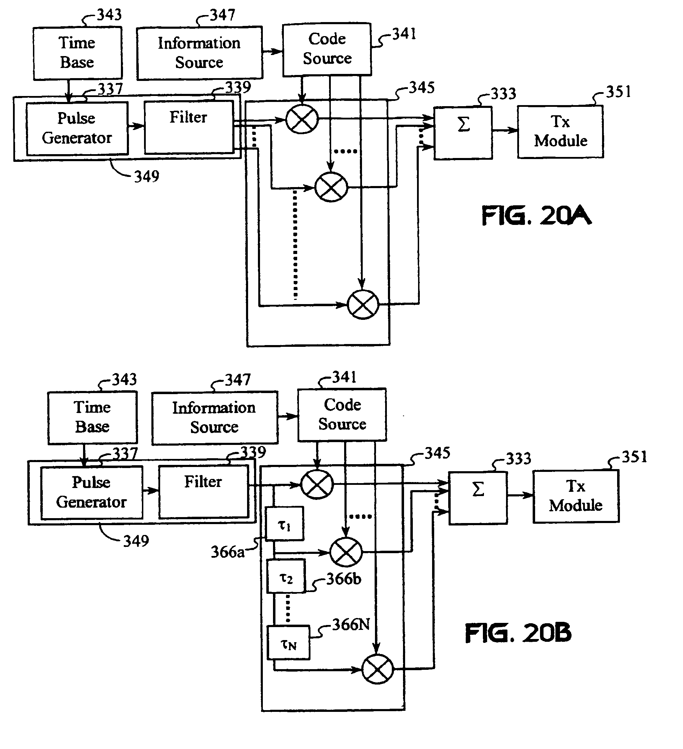

FIG. 20A shows a multicarrier transmission system.
FIG. 20B shows a multicarrier transmission system.

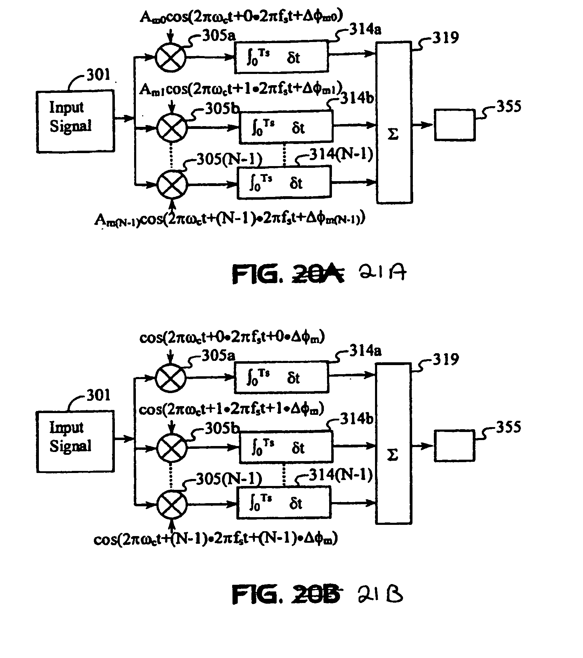

FIG. 21A is a diagram of a basic carrier-imerferometry receiver that correlates multiple frequency components separated from a received signal.
FIG. 21B shows a basic carrier-interferometry receiver that processes incrementally phase-offset signals.

Description of the Preferred Embodiment

The present invention is based on the realization that any received signal can be separated or sampled to provide multiple frequency components and that information spread across the bandwidth of multiple wideband signals can be recovered if the signals have unique amplitude-versus-frequency profiles (frequency-dependent gain distributions). Frequency-dependent gain distributions of received signals differ if frequency-diverse (e.g., wideband) transmit signals undergo different fades in a multipath environment. Frequency-dependent gain distributions of received signals can differ by providing different frequency-dependent gain distributions to the transmit signals. The preferred embodiments illustrate examples of (1) separating multiple received signals into frequency components and (2) separating information streams from the frequency components by exploiting the frequency diversity of communication signals in a multipath environment.

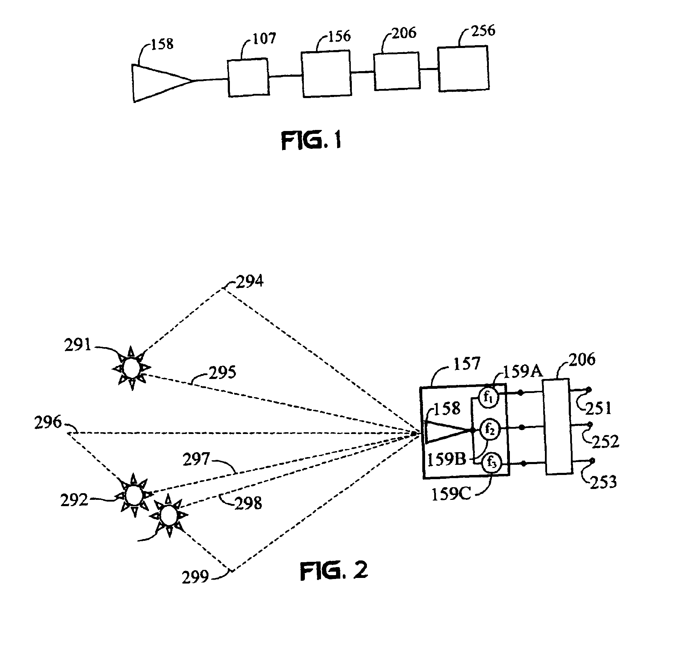

FIG. 1 shows a block diagram of a digital frequency-domain implementation of the present invention. A continuous wideband signal $x(t)$ is received at an antenna 158. In an $N$-user system, the received signal $x(t)$ is comprised of $N$ wideband components $x_n(t)$. If a plurality of users (or transmit sources) are spatially separated in a multipath environment, $N$ distinct communication channels can occupy the same frequency band. The continuous Fourier transforms (spectral components) of the received signal are $X(f)$, where $f_i \leq f \leq f_M$. The range of frequency $f$ is denoted by center frequencies $f_i....f_M$ for a set of M adjacent frequency bins that span the frequency band of the received signal $x(t)$.

The received signal $x(t)$ is digitized by an analog-to-digital converter 107 that samples the received signal $x(t)$ at equal time intervals at a rate of $f_s$. The analoe-to-digital converter 107 may be preceded by an anti-aliasing filter (not shown). The digital version of the received signal $x(t)$ is:

$$x(k) = \sum_{n=0}^{N-1} x_n(k)$$

The digitized signals $x(k)$ are spectrally decomposed by a filter bank 156. In this case the digitized signals $x(k)$ are decomposed by an M-point Discrete Fourier Transform (DFT) into $M$ frequency bins. A frequency bin represents the frequency band of each filter in the filter bank. The $M$-point DFT of $x(k)$ is denoted by $X(m)$, where $m=0.....M-1$.

$$X(m) = \sum_{n=0}^{N-1} X_n(m)$$

A spatial demultiplexer 206 weights and combines the spectral components $X(m)$ to separate at least one of the $N$-user signal components $X_n(m)$. The spatial demultiplexer 206 has a multiplying unit (not shown) where each digitized spectral component $X(m)$ is multiplied by a weight $w_n(m)$. Each of the weights $w_n(m)$ corresponds to one or more weights required to separate a particular signal from the interfering $N$-1 signals.

In a multipath-fading environment, signals $s_n(t)$ transmitted by each of the spatially separated $N$ transmitters have a unique spatial gain distribution upon reception. Therefore, the frequency-dependent gain distribution of each of the received signals is unique at a particular spatial location.

Open-loop and closed-loop methods may be performed by the present invention to estimate the channel characteristics used to determine weights $w_n(m)$ that optimize signal separation. Closed-loop techniques use feedback from receivers to estimate channel characteristics. A probing-feedback method that allows an estimation of the instantaneous channel vector is described in U.S. Pat. No. 5,471,647, which is hereby incorporated by reference. The probing-feedback method is further described in the following articles, which are also incorporated by reference: "Spectrum Reuse Using Transmitting Antenna Arrays with Feedback," Proc. International Conference on Acoustics, Speech, and Signal Processing, pp. 97-100, April 1994; and "Adaptive Transmitting Antenna Arrays with Feedback," IEEE Transactions on Vehicular Technology. Feedback from receivers in the present invention may be used to identify channel parameters and form the weights $w_n(m)$ by any optimal combining method, such as maximum ratio and equal gain combining. A method for minimizing crosstalk and reducing feedback in a closed-loop system is described by U.S. Pat. No. 5,634,199, which is hereby incorporated by reference. The open-loop and closed-loop methods may be used in the present invention to provide power control, adjustment to transmit-signal gain distributions, and beam-pattern adjustment to transmitting units.

A SIM processor that provides a multistage weight-and-sum or equivalent matrix solution is illustrated in FIG. 2. A frequency-diversity receiver 157 separates received signals into a plurality of frequency bands and couples the frequency components to a spatial demultiplexer 206. The spatial demultiplexer 206 performs a weight-and-sum or equivalent operation to separate a number n of unknown signals from a number m of measurements.

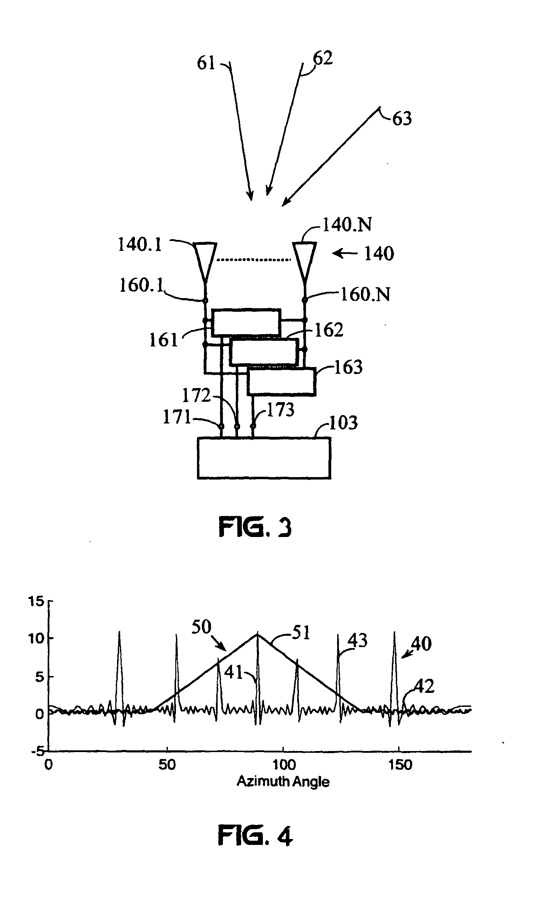

FIG. 3 shows a spread-spectrum receiver of the present invention. An array 140 including at least two receivers 140.1 and 140.N receives a plurality of signals $s_n(t)$ from a plurality of directions of arrival, such as directions 61, 62, and 63, in a communication channel (not shown). Different directions of arrival result in a plurality of different signal delays $\Delta t_l$. Signal responses of the receivers 140.1 and 140.N are output at one or more receiver outputs, such as outputs 160.1 and 160.N. The receiver-output signals are coupled into a plurality of correlators 161, 162, and 163. The output of each correlator 161, 162, and 163 is coupled to a multi-user detector 103. The multi-user detector 103 may include a sampler (not shown) that samples the correlator output over a predetermined time interval, such as the period of any information signal embedded in the signal $s_n(t)$. A decision system (not shown) may be employed to interpret or otherwise process signals output by the sampler (not shown).

Three transmitted signals $s_1(t)$, $s_2(t)$, and $s_3(t)$ arrive at the array 140 from the directions 61, 62, and 63, respectively. This simple case is shown for the purpose of facilitating an understanding of the function of the spread-spectrum receiver array. It will be appreciated that this understanding may be extended to more complex cases involving multipath components, distortions, noise, and large numbers of desired and/or interfering signals. The signals $s_1(t)$, $s_2(t)$, and $s_3(t)$ are assumed to be spread-spectrum signals, defined herein to mean any signal having a processing gain that exceeds one. It is preferable that the signals $s_1(t)$, $s_2(t)$, and $s_3(t)$ have high autocorrelation-to-cross correlation ratios (i.e., the signals are highly correlated with unsynchronized versions of themselves and substantially uncorrelated with other signals. It is preferable that the signals $s_1(t)$, $s_2(t)$, and $s_3(t)$ be substantially uncorrelated with unsynchronized versions of themselves.

The angle of arrival 61, 62, and 63 of each signal $s_1(t)$, $s_2(t)$, and $s_3(t)$, respectively, and the separation between the receivers 140.1 and 140.N determines the relative delay $\Delta t_i$ of the signals entering the correlators 161, 162, and 163. If the relative delay $\Delta t_i$ between samples of a particular signal $s_n(t)$ is less than the inverse of the signal bandwidth, the samples of the signal $s_n(l)$ from each receiver 140.1 and 140.N will be correlated. Additional delays may be provided by either or both receivers 140.1 and 140.N, or by the correlators 161, 162. and/or 163 to adjust the correlations of the received signals.

FIG. 4 shows a carrier beam pattern 40 and a correlation beam pattern 50 of an array 140 of receivers (or transmitters). The beam patterns 40 and 50 represent reception sensitivity or transmission-signal magnitude with respect to angular direction relative to the array 140. The carrier beam pattern 40 has a main beam 41, a plurality of sidelobes (such as sidelobe 42), and possibly, secondary main lobes (such as secondary main lobe 43). The correlation beam pattern 50 has a main beam 51 resulting from a correlation peak. The correlation beam pattern 50 does not have sidelobes, but it may have minor correlation peaks (not shown).

Carrier beam patterns are well known in the prior art. The main beam 41 results from a coherent combining of signals received by receivers in the array 140. Sidelobes result from minor coherencies between received signals. Secondary main lobes (such as secondary main lobe 43) can result from a coherent combining of received signals from array elements that are separated by a large distance.

Correlation beam patterns (such as beam pattern 50) result from variations of relative delay with respect to angle of arrival or angle of transmission. Ideally, the correlation beam pattern 50 does not have secondary main lobes for a particular spread-spectrum signal $s_n(t)$ no matter how far the receivers are separated because the signal $s_n(t)$ is uncorrelated for relative delay magnitudes in excess of the signal's $s_n(t)$ inverse bandwidth.

The main-beam width of the correlation beam pattern 50 is much larger than the main-beam width of the carrier beam pattern 40 shown in FIG. 4 because the carrier frequency is typically much larger than the signal bandwidth. Reducing the beam width of the correlation beam pattern 50 is done by increasing the signal $s_n(t)$ bandwidth or by increasing the separation between receivers in the array 140. Long Baseline Interferometry (LBI) or Very Long Baseline Interferometry (VLBI) are appropriate methods for carrying out methods of the present invention. In some cases, it may be advantageous to remove the carriers from each received signal before correlation. Removing the carriers or otherwise compensating for the carrier beam pattern can reduce the effect that coherencies between the carriers have on correlation.

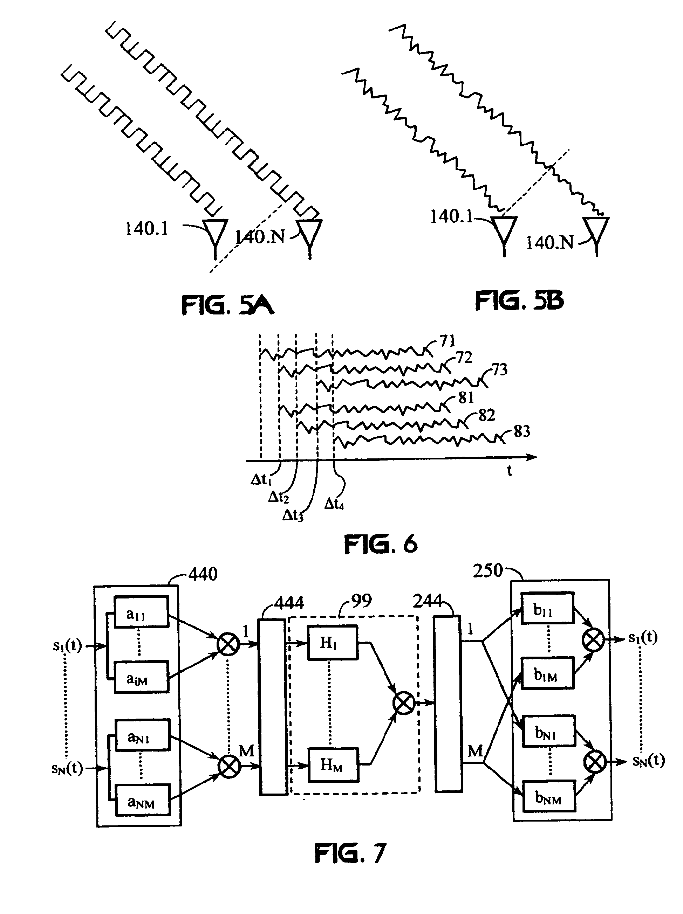

FIG. 5A shows a direct-sequence signal $s_n(t)$ arriving at an angle $\theta_i$ relative to an array 140 having two receivers 140.1 and 140.N separated by a distance d. The path-length difference between the signal $s_n(t)$ arriving at each of the receivers 140.1 and 140.N is $D_i = d \sin \theta_i$. The relative delay is $\Delta t_i = D/c$, where c is the speed of electromagnetic radiation in the medium in which the array 140 is located. In this case, the delay $\Delta t_i$ exceeds the chip rate of the direct-sequence code in signal $s_n(t)$. Thus an applied delay of $\Delta t_i$ (which may be achieved by an additional effective path length $D_i$) applied at receiver 140.1 will enable correlation of the signal $s_n(t)$ received by the receivers 140.1 and 140.N.

FIG. 5B shows a noise signal $s_n(t)$ arriving at an angle $\theta_i$ relative to an array 140 having two receivers 140.1 and 140.N separated by a distance d. Any appropriate processing method may be used to compensate for relative delays $\Delta t_i$ between signals received by the receivers 140.1 and 140.N. If the relative delay $\Delta t_i$ is greater than the inverse of the bandwidth of the noise signal, the received samples of the signal $s_n(t)$ will be uncorrelated.

A notable characteristic of the receiver shown in FIG. 3 is that it uses only two elements to separate three received signals $s_1(t)$, $s_2(t)$, and $s_3(t)$. The number of separable signals can be larger (in fact, much larger) than the number of receiving elements because each correlator 161, 162, and 163 is capable of generating an algebraically unique combination of received signals. In fact, any non-linear process may be used to generate an algebraically unique combination of received signals. In the present case, the signals $s_1(t)$, $s2(t)$, and $s_3(t)$ are separable because different relative delays $\Delta t_i$ are used to characterize each signal $s_n(t)$. These relative delays $\Delta t_i$ are associated with different angles of arrival (such as 61. 62, and 63 shown in FIG. 3). The relative delays $\Delta t_i$ may be associated with multipath phenomena that cause multiple reflections of a given signal $s_n(t)$ to arrive at a receiver at different times. Thus, a single receiver element may be used instead of a receiver array to separate multiple received signals and/or remove interference (and/or noise) from at least one desired signal $s_n(t)$.

FIG. 6 shows a relative time-domain representation of two samples of a received signal $s_n(t)$ having multipath components. Two samples are obtained for three delayed versions of a received signal $s_n(t)$. A first sample of received signals includes three multipath components 71, 72, and 73. Components 72 and 73 have relative delays of $\Delta t_1$ and $\Delta t_3$, respectively. A second sample of received signals also includes three multipath components 81, 82, and 83. Components 82 and 83 have relative delays of $\Delta t_2 - \Delta t_1 = \Delta t_1$ and $\Delta t_3 - \Delta t_1 = \Delta t_3$, respectively. The samples may be taken from separate receivers or one or more samples may be split (or otherwise replicated) from the first sample taken from a receiver. The second sample is time-shifted by an amount of $\Delta t_1$ so that component 72 lines up with component 81. This will cause components 72 and 81 to be correlated, whereas the other components will all be substantially uncorrelated.

Noise at a correlator's output originates from several sources including environment and circuit noise, undesired signals, and desired signals having time offsets. Noise output due to environment and circuit noise is typically negligible compared to noise due to undesired signals (such as jamming and other interference). Before synchronization, or during imperfect synchronization, a part of the desired signal is output as noise. The amount of output noise depends on the degree of synchronization. When there is no synchronization (the reference and target signals are more than one code chip apart, or they are separated by more than the inverse bandwidth of a true noise or other wideband signal), the output produced is all noise.

FIG. 7 shows a process diagram for a diversity-based cancellation system. Each of a number N of information signals $s_n(t)$ receive a plurality of weights in a weighting process 440. The weights may be deterministic or adaptive. The weighted signals are processed in a coding process 444, which may include the weighting process 440. The coding process 444 may include one or more transforms, such as DFTs, Fast Fourier Transforms (FFT), Walsh Transforms (WT), Hilbert Transforms (HT), Randomizer Transforms (RT), Permutator Transforms (PT), Inverse DFTs, Inverse FFTs, Inverse WTs, Inverse HTs, Inverse RTs, Inverse PTs, and any other reversible transform. The coding process 444 is a multicarrier-generation process. $M$ coded signals are coupled into a communication channel 99, which may operate on the signals. Coded signals coupled out of the channel 99 are decoded in a decoding process 244 that may include at least one $M$-point transform. The decoding process 244. can be regarded as a multicarrier-separation process.

A set of $M$ decoded signals are coupled into an interference-cancellation process 250 that separates the desired signals $s_n(t)$ from interference and outputs the separated desired signals $s_n(t)$. The interference-cancellation process 250 may include cancellation, correlation, and/or constellation processes, as well as any type of multi-user or multi-channel detection processes.

The diversity-based cancellation process shown in FIG. 7 is described in U.S. Pat. Appl. 09/347,182 wherein the coding process 444 is an inverse FFT and the decoding process 244 is an FFT. The decoding process 244 produces $M$ equations with $N$ unknown signals $s_n(t)$. The $M$ equations result from detection (or separation) of the $M$ carriers. The interference-cancellation process 250 may provide signal analysis using a different diversity parameter than the one or more diversity parameters that define the carriers. For example, frequency-diverse carriers may be summed and evaluated in the time-domain to separate information signals $s_n(t)$ encoded on the carriers. Weight-and-sum processes (or other types of cancellation) may be performed on the time-domain signals in order to remove interference and separate the desired signals $s_n(t)$.

FIG. 8 shows a time-domain representation of a plurality of frequency-domain encoded signals. Each pulse 1, 2, 3, 4, and 5 represents a Carrier Interferometry (CI) signal having three ($M$=3) multi-frequency carrier signals. CI enables $2M$-1 quasi-orthogonal signals $s_{n=2M-1}(t)$ in the time domain, whereas carrier processing yields only $M$ equations. Since the quality of quasi-orthogonal signals can be improved using multi-user detection (which can involve the same processes as interference cancellation), processing signals in a diversity-parameter domain that enables quasi-orthogonality of the signals being processed increases the capacity of the communication system. This realization may be extended to many different diversity-parameter domains. For example, many types of multicarrier-defined diversity-parameter domains (such as frequency) may be used to generate CI signals that can be processed in the time domain. One of the benefits of alternative diversity-parameter processing is that, in some cases, the benefits of both diversity and enhanced capacity can be obtained.

Different diversity parameters may be combined to increase capacity and/or diversity benefits in a communication system. FIG. 9A shows a process diagram of a multiple-diversity communication system. A plurality $N$ of information signals $s_n(t)$ are weighted in a plurality $N$ of weighting processes 440.1 to 440.N. Weighted information signals are coded by a plurality $L$ of coders 444.1 to 444.L or the weighted information signals control the coding of carrier signals generated by the coders 444.1 to 444.L. The coded signals are coupled into a communication channel 99.

Coded signals are coupled out of the communication channel 99 and decoded by a plurality of decoding processes 244.1 to 244.P. The decoded signals are coupled into a plurality of signal-separator processes 256.1 to 256.P. Each of the signal-separator processes 256.1 to 256.P generates a plurality of signals representing equations having a number N' of unknowns. A plurality of the signal-separator processes 256.1 to 256.P generates a number of equations that does not equal or exceed the number $N$ of unknowns. However, the number of equations generated by all of the signal-separator processes 256.1 to 256.P may equal or exceed the number $N$ of unknowns. A second-stage signal-separator process 257 may be implemented to combine the equations generated by the signal-separator processes 256.l.to 256.P and explicitly determine the values of the information signals $s_n(t)$.

FIG. 9B shows an alternative process diagram for a multiple-diversity communication system. A plurality N of information signals $s_n(t)$ are weighted in a plurality $N$ of weighting processes 440.1 to 440.N. Weighted information signals are coded by a plurality L of coders 444.1 to 444.L. The coded signals are coupled into a communication channel 99.

Coded signals are coupled out of the communication channel 99 and decoded by a plurality of decoding processes 244.1 to 244.P. The decoded signals from each decoding process are coupled into a plurality of signal-separator processes 256.1 to 256.P. Outputs from the signal-separator processes 256.1 to 256.P may be coupled to a second-stage signal-separator process 257.

Signal coding (described throughout the specification) with respect to transmitter-side coding can involve encoding carrier signals with weights according to a signal profile (such as a spatial gain distribution at a receiver) that facilitates separation of multiple received information signals having the same carriers. Spatial gain distributions describe all effects that cause the complex amplitude or other signal characteristics to vary with respect to a diversity parameter (or signal space). Both wireless and guided-wave signals have spatial gain variations. In free space, spatial gain variations result from many environmental effects such as shadowing, multipath, absorption, scattering, and path loss. Spatial gain variations can also be affected by a transmission system that controls beam shape, directionality, and/or polarization. Dispersion, reflections, attenuation, and amplification can affect spatial gain in a waveguide.

Frequency gain variations can result from the frequency-dependent nature of spatial gain variations. Frequency gain is the complex amplitude-versus-frequency distribution of a frequency-diverse signal. Differences in the complex amplitudes of each frequency component of frequency-diverse signals transmitted by different transmitters enable multiple access via cancellation, correlation, and/or constellation processing. U.S. Pat. Appl. No. 09/347,182 describes the use of frequency diversity as a spatial processing technique that does not require an antenna array. Another benefit of frequency-diversity processing compared to spatial-diversity processing is that it does not rely on the fast-fading environment of the communication channel. Frequency-diversity multiplexing can be performed in any multipath environment.

Frequency-diversity processing enables systems that have a small number of antennas to achieve frequency reuse and mitigate signal loss resulting from deep fades. Although it is counter-intuitive to redundantly modulate carrier signals when attempting to increase capacity, redundant-modulation techniques (such as frequency-diversity processing and CI) can provide improved capacity as well as diversity. In conventional multiple-access schemes, redundantly transmitting information in the frequency domain reduces bandwidth efficiency. Thus, a unique aspect of the invention is that redundant modulation with respect to a diversity parameter can achieve an increase in bandwidth efficiency.

FIG. 10 illustrates the use of nested interferometry to optimize capacity. Redundantly modulated carriers having different frequencies $f_1, f_2,$ and $f_3$ are frequency-diversity processed at each spatially separated receiver $S_1, S_2,$ and $S_3$. Each receiver produces three equations having a number of unknown information signals. These equations can be linked together via spatial processing (which, in this case is a process of combining the equations) to create nine unique equations. Therefore, up to nine different unknown signals can be solved explicitly in this example. FIG. 10 may include additional axes (not shown) representing additional diversity-parameter dimensions that may be used for multiplexing, diversity, and interferometric combining.

FIG. 11A shows a frequency-diversity interferometry multiplexing system. A plurality of transmitters 100.1 to 100.M each includes a carrier-signal generator 102.1 to 102.M. a carrier-code generator 106.1 to 106.M, an information-signal modulator 104.1 to 104.M, and a coupler 150.1 to 150.M coupled to a communication channel 99. At least one receiver 200 is coupled to the communication channel 99. The receiver 200 includes a wavelength demultiplexer 201 coupled to a down-converter 205 and an interference canceller 256. The down-converter 205 may include a decoder (not shown).

Each carrier-signal generator 102.1 to 102.M generates a plurality of carrier signals that are distinguished by different frequencies ($f_l, f_2, ...f_n$). It is assumed that each of the signal generators 102.1 to 102.M generates a simitar set of carrier signals. Each set of carrier signals is modulated by a plurality of carrier codes ($c_{mn}$) from its respective carrier-code generator 106.1 to 106.M. Each set of coded carrier signals is modulated by one of the information-signal modulators 104.1 to 104.M before being coupled into the communication channel 99.

The receiver 200 demultiplexes the received signals into wavelength (or frequency) components. Wavelength demultiplexing may include converting the received signals to electrical signals and performing digital-signal processing, such as Fourier transforms. Demultiplexing may also be performed using conventional optical-demultiplexing techniques. The demultiplexed signals are down converted to a common frequency band and coupled into a canceller 256, which separates the interfering signals using a cancellation, correlation, and/or a constellation method.

Optimizing the separation quality of the received signals can be achieved by adjusting the carrier codes and the channel characteristics. Carrier codes are adjusted by any of the carrier-code generators 106.1 to 106.M. Channel characteristics can be adjusted by adjusting transmission characteristics that affect the channel 99. In a wireless system, the directionality of a transmitting antenna determines the channel through which transmitted signals propagate. A known training sequence may be used to optimize the separation quality. The training sequence may be performed in a predetermined orthogonal channel, such as a time interval, spread-spectrum code, frequency band, directivity, phase space, or polarization.

FIG. 11B shows a cascaded interferometry system that uses frequency-diversity interferometry multiplexing and SIM. The transmitters are the same as in FIG. 11A. However, there is a plurality of spatially separated receivers 200.1 to 200.M. Each of the receivers 200.1 to 200.M includes a separator, such as a wavelength demultiplexer 201.1 to 201.M, coupled to a down converter 205.1 to 205.M. The outputs of the down conveners 205.1 to 205.M are input to an interference canceller 256.

Coded transmission signals that are coupled into the channel 99 have an amplitude-versus-frequency profile that depends on the coding of the carrier signals. As the signals propagate through the channel 99. their amplitude-versus-frequency profile can change. Signals may exhibit different amplitude-versus-frequency profiles at different locations in the channel 99. Signals in the channel 99 are expressed by the following equation:

$$C_1(x)s_1(t) + C_2(x)s_2(t) + ... + C_N(x)s_N(t)$$

$C_n(x)$ is the amplitude-versus-frequency profile associated with the $n$th transmitted information signal $s_n(t)$. The value of the amplitude-versus-frequency profile $C_n(x)$ depends on a channel parameter $x$ and the $n$th code applied to the signal

$s_n(t)$. The channel parameter $x$ describes the state of the communication channel 99 at a specific location in the channel relative to the location of the transmitter(s). Signals $R_k(t)$ received by a $k^{th}$ receiver are given by the following equation:

$$R_k(t) = C_1(x_k)s_1(t) + C_2(x_k)s_2(t) + \ldots + C_N(x_k)s_N(t)$$

The amplitude-versus-frequency profile $C_n(x_k)$ of signals received by the $k^{th}$ receiver may depend on the location of the $k^{th}$ receiver relative to the transmitter(s).

The received signals $R_k(t)$ are wavelength demultiplexed (e.g., separated into their component wavelengths or frequencies) into $M$ component signals. The information signals $s_n(t)$ are removed from the component signals or otherwise converted to signals having a common carrier frequency. The demultiplexing and down-conversion processes produce a plurality $M$ of component signals $R_{km}(t)$ representing combinations of the information signals $s_n(t)$. The component signals $R_{tm}(t)$ may represent either linear or nonlinear combinations of the information signals $s_n(t)$. Preferably, the combinations are algebraically unique.

An expression for a particular component signal $R_{km}(t)$ consisting of a linear combination of information signals $s_n(t)$ is represented by:

$$R_{km}(t) = (\alpha_{1k} + \alpha_{2k} + \ldots + \alpha_{Nk})s_1(t) + (\beta_{1k} + \beta_{2k} + \ldots + \beta_{Nk})s_2(t) + \ldots + (\zeta_{1k} + \zeta_{2k} + \ldots + \zeta_{Nk})s_N(t)$$

Each of the information signals $s_n(t)$ has a series of scaling factors $\alpha_{mk}$, $\beta_{mk}$,..., $\zeta_{mk}$ that depends on the amplitude-versus-frequency profile $C_n(x)$ applied to the carrier signals. The values of the scaling factors also depend on the effect of the communication channel 99 on the profile. The number $N$ of scaling factors in each series is the number of signals $s_n(t)$ transmitted by different transmitters.

If there are K receivers, the number of component signals (equations) $R_{km}(t)$ processed by the canceller 256 is $K \cdot M$. If the number of algebraically unique equations input to the canceller 256 exceeds the number of unknowns (information signals $s_n(t)$), the unknowns can be solved explicitly. The output of the canceller 256 includes the separated information signals $s_n(t)$.

FIG. 12 shows a spread-spectrum interferometer that can be used in a communication channel 99. At least two transmitters 100A and 100B transmit redundantly coded information signals $s_n(t)$ that are received and decoded by at least one receiver 200. The received signals undergo interference cancellation to separate or estimate the information signals $s_n(t)$.

A first transmitter 100A includes a signal modulator 104A that receives at least one information signal $s_1(t)$ and provides a plurality of weights $\alpha_1$ and $\alpha_2$ to the information signal $s_1(t)$ to generate a plurality of weighted information signals. The weighted information signals may be used to modulate a plurality of spread-spectrum signals produced by a multicarrier-signal generator 102A wherein each of the spread-spectrum signals is a carrier. The spread-spectrum signals may be CDMA, Frequency Hopped, Time Hopped, hybrid spread spectrum. $N$-point transform, or any type of multicarrier spread-spectrum signals. The weighted information signals may be input to the multicarrier-signal generator 102A and processed to produce a plurality of spread-spectrum signals that are information coded. The information-coded signals are coupled into the communication channel 99 by a coupler 150A. In this case, the communication channel 99 is a wireless channel and the coupler includes an antenna 158A. The signals that are coupled into the channel 99 by the first transmitter 100A are represented by the following expression:

$$C_1(\alpha_1 s_1(t)) + C_2(\alpha_2 s_1(t))$$

A second transmitter 100B having the same general design as the first transmitter 100A couples a plurality of spread-spectrum carrier signals into the channel 99. Each spread-spectrum carrier signal is modulated with at least one weighted ($\beta_1$, $\beta_2$) information signal $s_2(t)$. The signals that are coupled into the channel 99 by the second transmitter 100B are represented by the following expression:

$$C_1(\beta_1 s_2(t)) + C_2(\beta_2 s_2(t))$$

Spread-spectrum signals $C_1$ and $C_2$ represent different coded spread-spectrum signals. The spread-spectrum signals have characteristics that depend on their coding and the signals that they encode. Although two or more spread-spectrum signals (such as $C_1(\alpha_1 s_1(t))$ and $C_1(\beta_1 s_i(t))$) use the same code, the coded signals have values that depend on their arguments $(\alpha_1 s_1(t)$ and $\beta_1 s_1(t))$. A coupler 150C that includes at least one antenna 158C couples the transmitted signals out of the channel 99 to provide received signals to the receiver 200.

The values of the coded signals are realized upon decoding the spread-spectrum signals $C_1(\alpha_1 s_1(t))$ and $C_1(\beta_1 s_2(t))$ and separating interfering signals. A decoder 222 decodes the received signals using a plurality of inverse spreading codes. If multiple information signals had been encoded with similar or quasi-orthogonal spreading codes, the process of decoding those signals produces multiple interfering information signals. The interfering signals are input to an interference canceller 256 that separates the signals using cancellation, correlation and/or constellation techniques.

The values $\alpha_1$, $\alpha_2$, $\beta_1$, and $\beta_2$ applied to the transmitted information signals $s_1(t)$ and $s_2(t)$ represent any method of adjusting the information signals $s_1(t)$ and $s_2(t)$ to allow differentiation between decoded received signals. The step of adjusting the information signals $s_1(t)$ and $s_2(t)$ may result from the signals propagating in the channel 99. Differentiation may be achieved by any combination of interference cancellation, correlation, constellation techniques, filtering, and demodulation.

FIG. 13 shows a redundant-carrier communication system in which a plurality of carriers are received and separated with respect to at least one diversity parameter and then processed and combined with respect to another diversity parameter. In particular, carriers that are defined by signal frequency are modulated with time-dependent or phase-dependent coded information signals. A signal consisting of the modulated carriers is received and separated into individual modulated carriers. The carriers are decoded and summed to recover the time-domain information signals.

A transmitter 100 receives a plurality of information signals $s_1(t)$, $s_2(t)$, and $s_3(t)$, which are split by a plurality of splitters 210A, 210B, and 210C. The split signals are coded by a modulator 104 that acts upon a plurality of carrier signals produced by a carrier-signal generator 102. The carrier signals are coupled into a communication channel 99 by a plurality of couplers 150A, 150B, and 150C.

At least one receiver 200 receives the coded and modulated carrier signals. At least one coupler 151 couples the carriers out of the channel 99 to a Carrier separator 221 that separates the received carrier signals. In this case, the carriers are defined by their wavelength (or frequency). The carrier separator 221 may be a wavelength demultiplexer (not shown). The separated carriers are input to a weight compensator 222 that applies inverse coded signals with respect to the codes applied to the carriers by the modulator 104. The weight compensator 222 may compensate for variations of the code values resulting from distortion in the channel 99, the coupler(s) 150 and 151, the transmitter 100, and the receiver 200.

A plurality of carrier signals having different wavelengths are combined in each of a plurality summing devices 255A, 255B, and 255C. The summed signals are time-domain representations of the transmitted information signals $s_1(t)$, $s_2(t)$, and $s_3(t)$. The summing devices 255A, 255B, and 255C may include signal processors to shape the summed signals or filter the resulting sums to remove interference and/or noise. The outputs of the summing devices 255A, 255B, and 255C may be coupled to a multi-user detector (not shown).

One of the benefits of the receiver 200 shown in FIG. 13 is that it separates signals that interfere in at least one diversity parameter by processing the signals in a different diversity parameter. In this case, redundantly modulated carrier frequencies are combined and processed in the time domain to demultiplex multiple information signals modulated on the carriers. Separation of the information signals can be accomplished using a single-stage weight-and-sum processor and filters instead of a multi-stage cancellation network.

FIG. 14 shows a communication system that provides enhanced diversity and increased capacity. A modulator 104 modulates a plurality of information signals $s_n(t)$ onto a plurality of carrier signals generated by a multicarrier-signal generator 102. In this case, the signal generator 102 produces carrier signals having different frequencies $f_1$, $f_2$, and $f_3$. The modulated multicarrier signals are coupled into a communication channel 99 by a plurality of couplers 150A and 150B. In this case, the communication channel 99 is a wireless RF environment. Each coupler 150A and 150B includes an antenna 158A and 158B, respectively. The antennas 158A and 158B may be separate antenna elements or antenna-array processors (not shown).

Modulated carriers may experience spatial gain variations (spatially dependent variations of their complex amplitudes) due to propagation effects (such as multipath, shadowing, path loss, absorption, and scattering) or transmitter 100 parameters (such as beam shape, carrier weights, information-signal weights, and scanning). Modulated carrier signals are coupled out of the channel by a plurality of couplers, such as antennas 158C and 158D. A receiver 200 separates and processes the information signals $s_n(t)$ modulated on the carriers. The receiver 200 may include a multi-user detector (not shown) and/or a diversity combiner (not shown). The receiver 200 may have a design similar to the receiver design shown in FIG. 11A, FIG. 11B, and/or FIG. 12.

One benefit of the communication system shown in FIG. 14 is that the use of redundantly modulated frequency-diverse carriers reduces the influence of the communication channel on the spatial gain of the received signals. For example, in a narrow band system (or OFDM system where different frequency bands carry different information streams), rapid variations occur in the received signals' gain due to changes in the signal paths between the transmitter 100 and the receiver 200. Changes in the signal paths can result from relative motion between the transmitter 100 and the receiver 200. Objects (such as reflector 160) that move in the communication environment can cause signal-path changes if these objects reflect signals that propagate between the transmitter 100 and the receiver 200. These variations in intensity occurs rapidly (especially at high frequencies) because path variations as small as a fraction of a wavelength can significantly effect the gain of the received signals.

In SIM, weights in a spatial demultiplexer are set according to training sequences. Transmitted signals having predetermined values are received and used to calibrate the spatial demultiplexer. In a flat-fading environment, the spatial demultiplexer needs to be calibrated frequently. Frequency diversity mitigates flat fading. Information signals $s_n(t)$ transmitted on different carriers are combined in the receiver 200 to generate a plurality of composite information signals $s'_n(t)$. The signals $s'_n(t)$ are then used as carriers. Because frequency-selective fading has a minimal impact on the gain of the composite information signals $s'_n(t)$, large-scale fading effects (such as shadowing and path loss) may be relied upon to provide the composite information signals $s'_n(t)$ with predetermined spatial gains. For example, reflector 160 may provide a large-scale slowly varying effect, such as shadowing. The reflector 160 blocks the direct path of a transmission from the transmit antenna 150B to the receive antenna 158D.

Large-scale fading effects require less-frequent updates of the weights in the receiver 200 than small-scale, flat fading. Frequency diversity can reduce the effects of the channel 99 on transmitter-controlled and receiver-controlled spatial gain distributions of the signals $s'_n(t)$. The spatial gain distributions may be controlled by either or both the transmitter 100 and the receiver 200 using relative positions of couplers, coupler directionality, masking, polarization, or various combinations of transmitter and/or receiver control methods.

The number of received signals that can be separated is related to the number of receiver couplers, the number of carriers, and the techniques used to detect and separate signals. For example, in time-domain processing, the signals may overlap each other. A simple multi-user detector (included in the receiver 200) may separate the overlapping signals to provide a substantial increase in bandwidth efficiency. Similarly, spectral overlap of orthogonal carriers improves the spectral efficiency of the communication protocol. Combining SIM (which separates signals received by spatially diverse, angle-diverse, or polarization-diverse receivers) and multi-user detection based on a different diversity parameter enhances capacity and/or diversity.

FIG. 15 shows a receiver 200 that receives multicarrier signals and provides spatial diversity, frequency diversity, and enhanced capacity to spatial interferometry multiplexing. The receiver 200 has a plurality of couplers 150A, 150B, and 150C coupled to a communication channel (not shown) to generate a plurality of samples of multicarrier signals. The multicarrier signals received at each coupler 150A. 150B. and 150C are separated by a diversity-parameter demultiplexer 210A, 210B. and 210C.

In a wireless multicarrier system wherein each carrier is defined by its frequency, the demultiplexers 210A, 210B, and 210C include filter banks or frequency-separation processors that spectrally decompose the received signals into a set of frequency bins. A frequency bin represents the frequency band of a filter in the filter bank. Although the couplers 150A, 150B, and 150C shown in FIG. 15 are spatially separated, the couplers 150A, 150B, and 150C may provide any type of diversity, such as spatial, directionality, polarization, path, phase-space, time, or code diversity. The couplers 150A, 150B. and 150C may be diverse in more than one diversity parameter. Similarly, the carriers may have any combination of diversity parameters.

Carrier signals shown in FIG. 15 are represented as multi-frequency signals. These carriers (as well as carriers represented in other figures) may be coded. For example, a group of direct-sequence CDMA codes may be created from the appropriate selection of weights applied to each of the carriers. Although coded, the carriers are still redundantly modulated with information signals. The weight-and-sum systems 255A, 255B, and 255C shown in FIG. 15 may include one or more correlators (not shown) and/or one or more matched filters (not shown) for acting on either or both the time-domain and the frequency-domain signals resulting from the carriers. The receiver 200 in either FIG. 14 or FIG. 15 may perform multi-user detection between either or both the time-domain and frequency-domain coded carrier signals.

FIG. 16A illustrates a reception system and method of the invention. A desired transmitted signal and at least one decode signal and/or at least one copy of the desired signal are coupled out of a communication channel by an input coupler 306. A diversity decoder 307 separates the at least one decode signal and/or the at least one copy of the desired transmit signal. The desired signal and at least one separated signal are correlated in a cross correlator 308. Optionally, a demodulator 318 may be used to demodulate the correlation signal. For example, the demodulator 318 may remove one or more carrier signals from the desired information signal. In FIG. 16B, a decoder 307 generates a decode signal that is coupled into the cross correlator 308 with a desired received signal.

In coherence multiplexing, an information signal is encoded (e.g., modulated) onto a wideband radio signal. In one embodiment, multiple copies of the encoded signal are mapped into different values of at least one diversity parameter. In another embodiment, the encoded signal and a decode signal are mapped into different values of at least one diversity parameter. Mapping occurs at a transmitter, the communication channel, and/or at a receiver. Signals received by a receiver are separated with respect to their diversity-parameter values and correlated. Coherence multiplexing reduces receiver complexity and allows information to be recovered from true noise or chaos signals because a coherence-multiplex receiver does not need to generate a decode signal.

A receiver illustrated in FIG. 17 comprises a cross correlator 1408, a subcarrier demodulator 1424. an input coupler 1400 including an antenna 1402, a variable-delay device 1403 implemented as a diversity decoder, and a microprocessor 2406. According to this embodiment, a transmitted signal $s_n(t)$ and at least one delayed transmitted signal $s_n(t + \tau)$ and/or at least one delayed decode signal $d_n(t + \tau)$ are received by the antenna 1402, which passes the received signal to an RF amplifier 2408. The RF amplifier 2408 amplifies and passes the received signal to the cross correlator 1408.

The cross correlator 1408 can include a multiplier 2410, an amplifier 2414, an integrator 2416, and a sample-and-hold unit 2418. The sample-and-hold unit 2418 may include a timer (not shown) that generates timing signals to control sampling. The timer (not shown) may have properties (e.g., frequency and delay) of its timing signals controlled by the microprocessor 2406.

The multiplier 2410 may be a double-balanced mixer adapted to operate in the linear mode. The multiplier 2410 linearly multiplies the received transmit signal $s_n(t)$ with at least one delayed signal $s_n(t + \tau)$ and/or $d_n(t + \tau)$ received by the input coupler 1400. A product signal output from the multiplier 2410 is buffered by amplifier 2414 and then integrated over time by integrator 2416. The integrator 2416 is essentially a low-pass filter of first order that is adapted to respond on a time scale similar to the width of a component of the received signal $s_n(t)$. Integrator 2416 outputs a signal to the sample-and-hold unit 2418, which holds the peak value of the signal. The timer (not shown) may be delayed for proper triggering of the sample-and-hold unit 2418. The timer (not shown) may be delayed to compensate for delay caused by the multiplier 2410, and the amplifier 2414, and for integrator 2416 settling time.

Either a decode signal (such as decode signal $d_n(t + \tau)$) or a diversity-encoded (e.g., delayed) transmit signal (such as delayed signal $s_n(t + \tau)$) may be used to decode the received transmit signal $s_n(t)$. According to one embodiment, the decode signal $d_n(t + \tau)$ is received from the communication channel and delayed by the variable-delay device 1403 before being combined in the multiplier with the received transmit signal $s_n(t)$.

The microprocessor 2406 may vary the delay of the delay device 1403 to optimize correlation of the received signals $s_n(t)$ and $d_n(t + \tau)$. The delay device 1403 may provide more than one delay in order to correlate more than two received signals. The delay(s) r may vary in time relative to changes in the communication channel (not shown), the receiver, and/or a transmitter (not shown). The microprocessor 2406 may employ a feedback loop 2450 to track these changes and adjust the delay device 1403 accordingly. The microprocessor 2406 may control the delay $\tau$ of the delay device 1403 relative to a predefined code that characterizes a coded delay applied to the transmitted signals (such as the transmitted signals $s_n(t)$ and $d_n(t + \tau)$) by a transmission system (not shown).

In this example, the subcarrier demodulator 1424, comprises a bandpass filter 2444, a phase-locked loop 2446, and a low-pass filter 2448. Additional subcarrier demodulators (not shown) may be used to separate additional modulated subcarrier signals having the same diversity characteristics of the signal $s_n(t)$ and one or more of its associated signals $d_n(t + \tau)$ and/or $s_n(t + \tau)$.

In an FM subcarrier embodiment, a phase-locked loop frequency demodulator is used. The characteristics of the phase-locked loop 2446 determine the bandwidth capture and other basic aspects of the received signal. The optional bandpass filter 2444 can be used in series before the phase-locked loop 2446 to narrow the spectrum of demodulation performed by the phase-locked loop 2446.

In this case, the bandpass filter 2444 outputs a filtered signal to the phase-locked loop 2446. The phase-locked loop 2446 outputs an in-phase estimate signal via a further low-pass filter 2449 to the microprocessor 2406. The in-phase estimate signal provides the microprocessor 2406 with an estimate of the amplitude of the subcarrier so that the microprocessor 2406 can assess the quality of signal lock. A demodulated output signal of the phase-locked loop 2446 is filtered by low-pass filter 2448, which outputs a demodulated information signal.

Additional subcarrier modulation is achieved according to another aspect of the invention using pseudo-Manchester coding of digital data. It is referred to as "pseudo" because conventional Manchester coding performs digital decoding. According to the present invention, however, decoding of Manchester encoded signals is performed in the analog domain. The pseudo-Manchester encoding shifts digital information from the baseband to a frequency equivalent to an integral sub-multiple of the adjustable time base. or integer multiples of the time base. This achieves a coherent shift of digital data for proper recovery in the radio receiver.

FIG. 18 shows a transmitter that includes an information source 347, a time base 343, a transmit module 351, and a coded multicarrier generator 344. The multicarrier generator 344 includes a code source 341, a carrier generator 349, a modulator 345. and a combiner 333. The carrier generator 349 receives a timing signal from the time base 343 and generates a plurality of carrier signals that are weighted, modulated, or otherwise impressed with a code from the code source 341. The coded carriers are summed in the combiner 333 to generate a superposition signal. The multicarrier generator 344 shown in FIG. 18 may be used as a decoder 1402, as shown in a receiver shown in FIG. 19.

Multicarrier processing can be used to create complex time-domain signals (such as DS-CDMA signals) in either or both transmitters and receivers while requiring a low clock speed. Multicarrier processing may be used in receivers to generate a reference or decode signal that is cross-correlated with a received signal. A received multicarrier or wideband signal may be separated into multiple carrier components (with respect to at least one diversity parameter). The multiple carrier components may then be processed to recover an embedded information signal, remove interference, and/or perform multi-user detection.

FIG. 20A and FIG. 20B each show different implementations of a multicarrier transmission system. A time base 343 provides a timing signal to a multicarrier generator 349. In the system shown in FIG. 20A, the carriers generated by a wideband source (such as a pulse generator 337) are filtered and separated into component frequencies by a filter 339. Each component frequency is weighted with a code weight by a modulator 345 and combined in a combiner 333 to produce a superposition signal. In the system shown in FIG. 20B, A time-domain signal generated by the multicarrier generator 349 receives differential delays by a plurality of delay devices 366a to 366N before being weighted and combined to provide a superposition signal. Either system shown in FIG. 20A and FIG. 20B, without the information source 347 and the transmit module 351, may be used to generate decode signals in a receiver.

A basic CI receiver for an $m^{th}$ user is shown in FIG. 21A. Signal components received from a communication channel (not shown) have various values of amplitude $A_{mn}$ and phase $\phi_{mn}$. These values may vary between received signal components due to amplitude and phase profiles of the transmitted signals, effects of the communication channel on the amplitude $A_{mn}$ and the relative phase $\phi_{mn}$ of each received signal components, and any effects on the amplitude $A_{mn}$ and the relative phase $\phi_{mn}$ caused by reception. Transmission and/or reception may be controlled to provide predetermined relative amplitudes and/or phases to the received signals. The relative values of amplitude $A_{mn}$ and phase $\phi_{mn}$ of each received component are taken into consideration (e.g., the relative values may be matched) when providing a cross-correlation signal to each component.

A CI receiver for an $m^{th}$ user is shown in FIG. 21B. CI signals are coupled out of a communication channel (not shown) by a coupler 301. Information signals are extracted from each carrier by a plurality N of correlators 305a to 305N. The correlators 305a to 305N may include a filter bank (not shown). In this case, the correlators 305a to 305N project the received signals onto the orthonormal basis of the transmitted signals. The constant-phase value $\Delta\phi m$ for an $m^{th}$ user equals $2\pi n/N$. Correlators (such as the down-converters 305a to 305N) may additionally compensate for channel distortion and/or addressing. The correlators 305a to 305N may apply windowing and/or other filtering processes to the received signals.

Signals output from the correlators 305a to 305N may be integrated by a plurality of integrators 314a to 314N over a symbol interval $T_3$ before being combined in a combiner 319. A decision device 355 detects the combined signals. The decision device 355 may be part of the combiner 319. The decision device 355 may perform multi-user detection or multi-channel detection and may perform any combination of cancellation and constellation processes to determine the value(s) of received signal(s).

In the preferred embodiments, several kinds of spatial interferometry are demonstrated to provide a basic understanding of diversity reception and spatial demultiplexing. With respect to this understanding, many aspects of this invention may vary. For example, the antenna array may be a multiple-feed single-dish antenna where each feed is considered to be an individual antenna element. A CPU may be used to perform the weight-and-sum operations or equivalent types of cancellation processes that result in separation of the signals. Additionally, a spatial demultiplexer may include combinations of space, frequency, time, directionality, mode, and polarization-diversity combining methods. Furthermore, constant-modulus signals may be transmitted in the communication system. Constant-modulus transmissions can simplify the spatial demultiplexing of received signals. In this regard, it should be understood that such variations as well as other variations fall within the scope of the present invention, its essence lying more fundamentally with the design realizations and discoveries achieved than merely the particular designs developed.

The foregoing discussion and the claims that follow describe the preferred embodiments of the present invention.

**Claims**

**1.** A method for spatial processing of interfering signals, comprising:

receiving a discrete time input signal;
transforming the discrete time input signal into a plurality of spectral components; and
applying a set of weights computed for each of a plurality of channels to said spectral components to produce weighted spectral components, **characterized by**:

cancelling co-channel interference between the weighted spectral components by multi-stage combining the weighted spectral components, each of which has a different amplitude, and thereafter estimating received data symbols by processing said weighted spectral components.

**2.** The method of claim 1 wherein the discrete time input signal is obtained by sampling a spread-spectrum signal.

**3.** The method of claim 1 wherein the discrete time input signal is obtained by sampling a multicarrier signal.

**4.** The method of claim 1, wherein the discrete time input signal is obtained by sampling a code division multiple access signal.

**5.** The method of claim 1, wherein the discrete time input signal is obtained by sampling a continuous-time signal.

**6.** The method of claim 1, wherein the discrete time input signal is obtained by sampling a received signal at a uniform sampling rate.

**7.** The method of claim 6, wherein the received signal is filtered using an anti-aliasing filter prior to being sampled at the uniform sampling rate.

**8.** The method of claim 1, wherein the discrete time input signal is transformed into N spectral components using an N-point discrete Fourier transform.

**9.** The method of claim 8, wherein transforming the discrete time input signal into N spectral components includes combining redundant ones of the spectral components.

**10.** The method of claim 8, wherein transforming the discrete time input signal into N spectral components includes filtering non-redundant ones of the spectral components from redundant ones thereof.

**11.** The method of claim 1, wherein the weights are computed with respect to channel fading.

**12.** The method of claim 1, wherein values of the weights are time-dependent according to channel conditions.

**13.** The method of claim 1, wherein the weights are computed according to a training sequence.

**14.** The method of claim 1, wherein the discrete time input signal is received from an antenna array.

**15.** The method of claim 1, wherein the discrete time input signal is derived from at least two received signals transmitted by a common transmitter with different beam patterns.

**16.** An apparatus for processing a plurality of received signals which interfere with one another arid which have different amplitude versus frequency profiles, the apparatus including:

a diversity receiver (157) adapted to separate the received signals into a plurality of frequency components, and a multistage spatial demultiplexer (206) communicatively coupled to the diversity receiver and configured to process either or both of amplitude variations and phase variations within a plurality of frequency components of the received signals, **characterized by**:

a decision processor communicatively coupled to the multistage spatial demultiplexer and configured to estimate received data symbols from the frequency components of the received signals;

wherein the multistage spatial demultiplexer includes a weight generation unit configured to generate a plurality of weights according to the amplitude versus frequency profiles of the received signals and wherein the multistage spatial demultiplexer further includes a multistage combining unit configured to weight and combine the received signals using the plurality of weights produced by the weight generation unit.

**17.** The apparatus of claim 16, wherein the diversity receiver includes a filter bank (156).

**18.** The apparatus of claim 16, wherein the diversity receiver includes multiple antennas (140).

**Patentansprüche**

1. Verfahren zum räumlichen Verarbeiten von interferierenden Signalen, beinhaltend:

    Empfangen eines zeitdiskreten Eingangssignals; Umwandeln des zeitdiskreten Eingangssignals in eine Vielzahl von Spektralkomponenten; und
    Anwenden einer Gruppe von Gewichtungen, berechnet für jeden einer Vielzahl an Kanälen, auf die Spektralkomponenten, um gewichtete Spektralkomponenten zu erzeugen, **gekennzeichnet durch**
    Entfernen von Zweikanal-Interferenzen zwischen den gewichteten Spektralkomponenten **durch** mehrstufiges Kombinieren der gewichteten Spektralkomponenten, wobei jede der Spektralkomponenten eine unterschiedliche Amplitude aufweist, und hiernach Abschätzen von empfangenen Datensymbolen **durch** Verarbeitung der gewichteten Spektralkomponenten.

2. Verfahren nach Anspruch 1, wobei das zeitdiskrete Eingangsignal durch Abtasten eines Wechselspektrums-Signals gewonnen wird.

3. Verfahren nach Anspruch 1, wobei das zeitdiskrete Eingangssignal durch Abtasten eines Multi-Carrier-Signals gewonnen wird.

4. Verfahren nach Anspruch 1, wobei das zeitdiskrete Eingangssignal durch Abtasten eines Codemultiplexsignals gewonnen wird.

5. Verfahren nach Anspruch 1, wobei das zeitdiskrete Eingangsignal durch Abtasten eines zeitkontinuierlichen Signals gewonnen wird.

6. Verfahren nach Anspruch 1, wobei das zeitdiskrete Eingangssignal durch Abtasten eines empfangenen Signals mit gleichmäßiger Abtastrate gewonnen wird.

7. Verfahren nach Anspruch 6, wobei das empfangene Signal durch Verwenden eines Antialiasing-Filter gefiltert wird, bevor dieses mit der gleichmäßigen Abtastrate abgetastet wird.

8. Verfahren nach Anspruch 1, wobei das zeitdiskrete Eingangssignal mittels einer diskreten N-Punkt FourierTransformation in N Spektralkomponenten transformiert wird.

9. Verfahren nach Anspruch 8, wobei das Transformieren des zeitdiskreten Eingangssignals in N Spektralkomponenten das Kombinieren von redundanten Spektralkomponenten beinhaltet.

10. Verfahren nach Anspruch 8, wobei das Transformieren des zeitdiskreten Eingangssignals in N Spektralkomponenten das Filtern von nicht-redundanten Komponenten von redundanten Komponenten der Spektralkomponenten beinhaltet.

11. Verfahren nach Anspruch 1, wobei die Gewichtungen unter Berücksichtigung von Kanalschwund berechnet werden.

12. Verfahren nach Anspruch 1, wobei Werte der Gewichtungen zeitabhängig gemäß Kanalzuständen sind.

13. Verfahren nach Anspruch 1, wobei die Gewichtung gemäß einer Trainingssequenz berechnet werden.

14. Verfahren nach Anspruch 1, wobei das zeitdiskrete Eingangssignal von einer Antennengruppe empfangen wird.

15. Verfahren nach Anspruch 1, wobei das zeitdiskrete Eingangssignal von mindestens zwei empfangenen Signalen abgeleitet wird, welche durch einen üblichen Transmitter mit unterschiedlichen Abstrahlcharakteristiken übertragen werden.

16. Vorrichtung zur Verarbeitung einer Vielzahl von empfangenen Signalen, welche miteinander interferieren, und welche unterschiedliche Amplituden- bzw. Frequenzprofile aufweisen, wobei die Vorrichtung beinhaltet:

    einen Diversityempfänger (157), welcher derart angepasst ist, um die empfangenen Signale in eine Vielzahl von Frequenzkomponenten zu trennen, und einen mehrstufigen räumlichen Demultiplexer (206), welcher mit dem Diversityempfänger datentechnisch verbunden und

zum Verarbeiten von Amplitudenvariationen und/oder Phasenvariationen innerhalb einer Vielzahl von Frequenzkomponenten der empfangenen Signale konfiguriert ist, **gekennzeichnet durch**

einen Entscheidungsprozessor, der mit dem mehrstufigen Demultiplexer datentechnisch verbunden ist und zur Abschätzung der empfangenen Datensymbole von den Frequenzkomponenten der empfangenen Signale konfiguriert ist;

wobei der mehrstufige räumliche Demultiplexer eine Einheit zur Erzeugung von Gewichtungen beinhaltet, die zum Erzeugen einer Vielzahl von Gewichtungen hinsichtlich der Amplituden- bzw. Frequenzprofile der empfangenen Signale konfiguriert ist, und wobei der mehrstufige räumliche Demultiplexer weiterhin eine mehrstufige Kombinationseinheit beinhaltet, die zur Gewichtung und Kombination der empfangenen Signale unter Verwendung der Vielzahl an Gewichtungen, erzeugt durch die Einheit zur Erzeugung von Gewichtungen, konfiguriert ist.

**17.** Vorrichtung nach Anspruch 16, wobei der Diversityempfänger eine Filterbank (156) beinhaltet.

**18.** Vorrichtung nach Anspruch 16, wobei der Diversityempfänger mehrere Antennen (140) aufweist.

## Revendications

**1.** Procédé pour le traitement spatial de signaux brouilleurs, comprenant :

la réception d'un signal d'entrée à temps discret ;

la transformation du signal d'entrée à temps discret en une pluralité de composantes spectrales ; et

l'application d'un ensemble de poids, calculés pour chacune d'une pluralité de voies, auxdites composantes spectrales pour produire des composantes spectrales pondérées, **caractérisé par** :

l'annulation du brouillage sur la voie commune entre les composantes spectrales pondérées par combinaison multi-étagée des composantes spectrales pondérées, chacune desquelles ayant une amplitude différente, et ensuite l'estimation de symboles de données reçus par traitement desdites composantes spectrales pondérées.

**2.** Procédé selon la revendication 1, dans lequel le signal d'entrée à temps discret est obtenu en échantillonnant un signal à spectre étalé.

**3.** Procédé selon la revendication 1, dans lequel le signal d'entrée à temps discret est obtenu en échantillonnant un signal à porteuses multiples.

**4.** Procédé selon la revendication 1, dans lequel le signal d'entrée à temps discret est obtenu en échantillonnant un signal d'accès multiple par différence de code.

**5.** Procédé selon la revendication 1, dans lequel le signal d'entrée à temps discret est obtenu en échantillonnant un signal de temps continu.

**6.** Procédé selon la revendication 1, dans lequel le signal d'entrée à temps discret est obtenu en échantillonnant un signal reçu à un taux d'échantillonnage uniforme.

**7.** Procédé selon la revendication 6, dans lequel le signal reçu est filtré en utilisant un filtre d'anti-repliement avant d'être échantillonné au taux d'échantillonnage uniforme.

**8.** Procédé selon la revendication 1, dans lequel le signal d'entrée à temps discret est transformé en N composantes spectrales en utilisant une transformée de Fourier discrète à N points.

**9.** Procédé selon la revendication 8, dans lequel la transformation du signal d'entrée à temps discret en N composantes spectrales comprend la combinaison de celles redondantes parmi les composantes spectrales.

**10.** Procédé selon la revendication 8, dans lequel la transformation du signal d'entrée à temps discret en N composantes spectrales comprend le filtrage de celles non redondantes parmi les composantes spectrales par rapport à celles redondantes.

**11.** Procédé selon la revendication 1, dans lequel les poids sont calculés par rapport à l'évanouissement de voie.

**12.** Procédé selon la revendication 1, dans lequel des valeurs des poids sont dépendantes du temps en fonction des conditions de voie.

**13.** Procédé selon la revendication 1, dans lequel les poids sont calculés en fonction d'une séquence d'apprentissage.

**14.** Procédé selon la revendication 1, dans lequel le signal d'entrée à temps discret est reçu à partir d'un réseau d'antennes.

**15.** Procédé selon la revendication 1, dans lequel le signal d'entrée à temps discret est dérivé à partir d'au moins deux signaux reçus transmis par un émetteur commun avec des diagrammes de faisceau différents.

**16.** Dispositif pour traiter une pluralité de signaux reçus qui interfèrent entre eux et qui ont des profils différents de l'amplitude en fonction de la fréquence, le dispositif comprenant :

un récepteur en diversité (157) adapté pour séparer les signaux reçus en une pluralité de composantes de fréquence et un démultiplexeur spatial multi-étage (206) couplé en communication avec le récepteur en diversité et configuré pour traiter des variations d'amplitude et/ou des variations de phase dans une pluralité de composantes de fréquence des signaux reçus, **caractérisé par** :

un processeur de décision couplé en communication avec le démultiplexeur spatial multi-étage et configuré pour estimer des symboles de données reçus à partir des composantes de fréquence des signaux reçus ;

dans lequel le démultiplexeur spatial multi-étage comprend une unité de génération de poids configurée pour générer une pluralité de poids en fonction des profils d'amplitude en fonction de la fréquence des signaux reçus et dans lequel le démultiplexeur spatial multi-étage comprend en outre une unité de combinaison multi-étage configurée pour pondérer et combiner les signaux reçus en utilisant la pluralité de poids générée par l'unité de génération de poids.

**17.** Dispositif selon la revendication 16, dans lequel le récepteur en diversité comprend un banc de filtres (156).

**18.** Dispositif selon la revendication 16, dans lequel le récepteur en diversité comprend des antennes multiples (140).

FIG. 1

FIG. 2

**FIG. 3**

Azimuth Angle

**FIG. 4**

FIG. 5A

FIG. 5B

FIG. 6

FIG. 7

**FIG. 8**

**FIG. 9A**

**FIG. 9B**

**FIG. 10**

FIG. 11A

FIG. 11B

**FIG. 12**

**FIG. 13**

**FIG. 14**

**FIG. 15**

Input Coupler `306` → Diversity Decoder `307` → Cross Correlator `308` → Demodulator (Optional) `318`

## FIG. 16A

Input Coupler `306` → Cross Correlator `308` → Demodulator (Optional) `318`

Decoder `307` →

## FIG. 16B

Input Coupler `1402` `1400`

RF Amp `2408` → Delay `1403`

`2410` ⊗ ←

Micro Processor `2406`

▽ `2414`

`1408`

Integrator `2416`

LPF `2450` `2449`

S/H `2444` `2446` ← BPF → PLL → LPF `1424` `2448` → $s_n(t)$

`2418`

## FIG. 17

FIG. 18

FIG. 19

Time Base 343

Information Source 347

Code Source 341

Pulse Generator 337

Filter 339

345

Σ 333

Tx Module 351

349

⊗

⊗

⊗

**FIG. 20A**

Time Base 343

Information Source 347

Code Source 341

Pulse Generator 337

Filter 339

345

Σ 333

Tx Module 351

349

⊗

$\tau_1$

366a

$\tau_2$ 366b

⊗

$\tau_N$ 366N

⊗

**FIG. 20B**

$$A_{m0}\cos(2\pi\omega_c t+0\bullet 2\pi f_s t+\Delta\phi_{m0})$$

FIG. ~~20A~~ 21A

$$\cos(2\pi\omega_c t+0\bullet 2\pi f_s t+0\bullet\Delta\phi_m)$$

FIG. ~~20B~~ 21B

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5828658 A
- US 5642353 A
- US 5625880 A
- US 5592490 A
- US 5515378 A
- US 5437055 A
- US 5513176 A
- US 5577265 A
- US 6008760 A

- US 5519692 A
- US 5504783 A
- US 5563906 A
- US 5671168 A
- US 5528581 A
- US 5471647 A
- US 5634199 A
- US 347182 A

**Non-patent literature cited in the description**

- Spectrum Reuse Using Transmitting Antenna Arrays with Feedback. *Proc. International Conference on Acoustics, Speech, and Signal Processing,* April 1994, 97-100

- Adaptive Transmitting Antenna Arrays with Feedback. *IEEE Transactions on Vehicular Technology*